# EUROPEAN PATENT SPECIFICATION

(11) **EP 0 444 332 B1**
(45) Date of publication and mention of the grant of the patent: **09.06.1993**
(21) Application number: 90203493.3
(22) Date of filing: 24.12.1990
(51) Int. Cl.: F25B 31/00, F25B 49/02

(54) **Multi-compressor cooling plant**
Kälteanlage mit mehreren Verdichtern
Installation de réfrigération à plusieurs compresseurs

(30) Priority: 02.03.1990 IT 1955090
(43) Date of publication of application: 04.09.1991
(73) Proprietor: ARNEG S.P.A., I-35010 Marsango di Campo S. Martino, Padua (IT)
(72) Inventor: Schiesaro, Pierluigi, I-35125 Padua (IT)
(74) Representative: De Carli, Erberto

(56) References cited:
- GB-A- 2 059 109
- GB-A- 2 196 759
- US-A- 4 177 649
- US-A- 4 384 462
- US-A- 4 535 602

## Description

The present invention relates to a multi-compressor cooling plant.

Cooling plants are known whose actual cooling station comprises a plurality of motor-driven compressors which in order to achieve the most effective energy efficiency are of different capacity.

The presence of motor-driven compressors of different capacities thus allows, in the various conditions of requirement during operation, different powers to be achieved in a series of variable stepped values of a contained number identified by the possible combinations of the various capacities of the motor-driven compressors. Indeed, it is known that with the plants currently used it is not possible to have a linear and continuous delivery of power either increasing or diminishing.

US-A-4 384 462 discloses a multi-compressor cooling plant which includes a plurality of compressors of different capacity. This plant is controlled by a controller which provides to increase or decrease the compressors capacity in order to increase overall plant efficiency.

Another refrigeration system, having an inverter to vary the compressor capacity is disclosed in the GB-A-2 196 759.

It would be possible to obtain a continuous linear delivery by combining each motor-driven compressor with an inverter which would correlate its operation, but it must be pointed out that the cost of one inverter is greater than the cost of one motor-driven compressor. A different solution to this problem is not currently known.

The aim of the present invention is to create a multi-compressor cooling plant in which the individual motor-driven compressors are of a different power which is of simple construction and of a limited cost and which at the same time allows a linear and continuous delivery of power to match requirements as they present themselves.

This aim according to the present invention is achieved by creating a multi-compressor cooling plant, according to claim 1.

A better understanding of the structural and operating characteristics and the advantages of a cooling plant according to the present invention shall be gained from the description given by way of example and in no way limiting which refers to the attached schematic drawings in which:
Figure 1 is a graph showing the operation of a known cooling plant,
Figure 2 is a schematic representation of a cooling plant according to the present invention, and
Figure 3 is a graph showing the operation of the cooling plant in Figure 2.

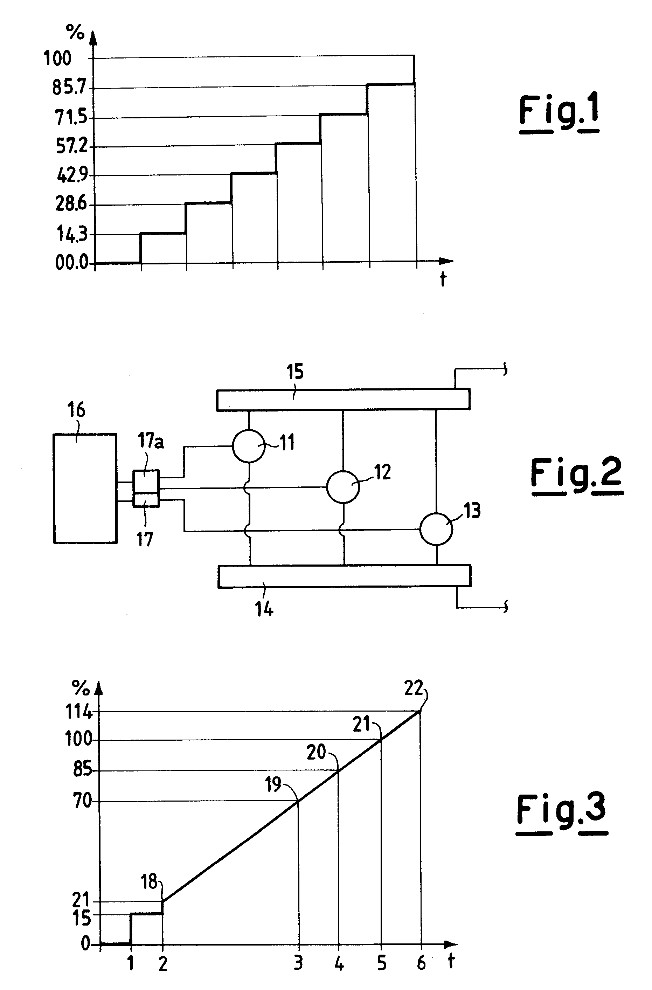

With reference to Figure 1, which as stated is a graph showing the operation of a cooling plant of a known type which uses three motor-driven compressor units of a different capacity, it will be noted that in order to satisfy the different cooling requirements stepped power values are available represented by a limited number of values.

In operation, such a system brings in action a capacity which is either partly unused for certain requirements or by contrast is deemed insufficient for the said requirements; in any case it is unlikely that the power available matches that actually required.

According to the present invention a multi-compressor cooling plant is therefore created, the components that concern the present description being schematically represented in Figure 2, which can be adopted for user equipment which is as diverse as may be.

The cooling plant essentially comprises a cooling station with a plurality of motor-driven compressors, three in the example and indicated by 11, 12 and 13 respectively, which are of a different capacity are mounted in parallel and positioned between a suction manifold 14 and an exhaust or discharge manifold 15. The plant according to the present invention is characterised in that a dedicated or programmable central logic system 16 (Dedicated Logic System or PLC) is associated with an inverter 17 and an on-off control 17a which starts up and causes the selective operation of the individual motor-driven compressors 11, 12 and 13.

Such an arrangement enables a power which is selectively increasing in a linear way to be achieved and enables the latter to be maintained depending on the particular requirements of the user equipment (not shown).

This operation is further explained by considering the graph in Figure 3 which refers to the plant shown in Figure 2.

Assume that the two motor-driven compressors 11 and 12 are of a low capacity, for example each equal to one sixth of the total capacity or alternatively equal to 15% of the latter, and that motor-driven compressor 13 is of a high capacity or equal to about two thirds of the total capacity or alternatively equal to 70% of the latter.

The abscissa of the graph shows the operating times of the motor-driven compressors and the ordinate shows the percentages of the power in question.

It will thus be noted how, by means of dedicated or programmable logic system 16, in a first instance motor-driven compressor 11 is started up by means of the on-off control 17a at time t1 and runs until time t2 so that it reaches a capacity equal to 15%. If the power requirement is increasing, motor-driven compressor 11 is immediately turned off and at the same time motor-driven compressor 13 is started up which has a capacity equal to 70% of the total capacity and which is initially made to run at the minimum speed of rotation, for example 17Hz, thus delivering 21% of the total capacity.

From this point a linear increase in the power available between time t2 and time t3 begins until at point 19 the percentage power reached by the plant is equal to 70% at 50Hz with motor-driven compressor 13 on. In order to continue with a linear development in the interval between t3 and t4, it is necessary to start up motor-driven compressor 12 and, by means of inverter 17, to decrease the power of motor-driven compressor 13 by the same amount that motor-driven compressor 12 increased it. From here it is possible linearly to increase the power delivered by working inverter 17 until it reaches for example 50Hz, thus providing 85% of the total capacity.

In order to continue with a linear development in the interval between t4 and t5 it is necessary to start up motor-driven compressor 11 and, by means of the inverter, to decrease the power of motor-driven compressor 13 by the same amount that motor-driven compressor 11 increased it. From here it is possible to increase the power delivered by working the inverter until it reaches for example 50Hz, thus providing 100% of the total capacity.

Furthermore, at point 22 at 60Hz a power equal to as much as 114% of the plant's power can be achieved.

In the above-described manner we thus have a cooling plant power which is selectively increasing in a linear way which makes full use of the plant's possibilities, with no waste whatsoever and keeps itself equal to the requirements of the user equipment.

Of course, in the above description of the drawings, the number of motor-driven compressors considered and the percentage values of power of the motor-driven compressors are not binding and may be varied both in number and in the individual capacity, provided that in general there is one high-power motor-driven compressor connected and operated by a single inverter and other low-power motor-driven compressors having capacity which is no greater than the inverter control range, being connected and operated by the on-off control means.

According to the present invention it is thus possible, as stated above, to have a plant that provides linearly variable power at the minimum cost since it essentially comprises standard motor-driven compressors and a single inverter.

## Claims

1. A multi-compressor cooling plant comprising a cooling station with a plurality of motor-driven compressors (11, 12,13) of different capacity which are mounted in parallel between a suction manifold (14) and a discharge manifold (15), and a controller (16,17,17a) for selectively controlling the operating states of the compressors so as to meet actual cooling requirements, characterised in that the controller (16,17,17a) comprises a single inverter (17) controlling the compressor (13) having the highest capacity and an on-off control (17a) for the other compressors (11,12) having a capacity which is not greater than the inverter control range, the controller comprising a logic system (16) operating to adjust the on-off control and the inverter such that the total capacity is equal to the actual cooling requirements.

2. A cooling plant according to claim 1, characterised in that the said motor-driven compressors (11,12,13) are three in number of which two are of low power (11,12) and a third (13) of high power.

3. A cooling plant according to claim 1, characterised in that it comprises at least two low-power motor-driven compressors and one high-power motor-driven compressor.

4. A cooling plant according to claim 2, characterised in that the said two low-power motor-driven compressors (11,12) each have about one sixth of the total power and the said third high-power motor-driven compressor (13) has about two thirds of the total power.

5. A cooling plant according to claim 2, characterised in that the said two motor-driven compressors (11,12) each have a power equal to 15% of the total power while the said third motor-driven compressor (13) has a power equal to 70%.

## Patentansprüche

1. Kälteanlage mit mehreren Verdichtern mit einer Kühlstation mit einer Mehrzahl von motorbetriebenen Verdichtern (11,12,13) unterschiedlicher Kapazität, welche parallel zwischen einer Saugleitung (14) und einer Austragsleitung (15) angeordnet sind, und mit einer Regeleinrichtung (16,17,17a) für ein selektives Regeln des Betriebszustandes der Verdichter, um den erforderlichen Kühlbedingungen zu genügen, dadurch gekennzeichnet, daß die Regeleinrichtung (16,17,17a) einen einzelnen Inverter (17), welcher den Verdichter (13) mit der größten Kapazität regelt bzw. steuert, und eine Ein-Aus-Regelung (17a) für die anderen Verdichter (11,12) mit einer Kapazität, welche den Regelbereich des Inverters nicht übersteigt, aufweist, wobei die Regeleinrichtung ein logisches System (16) umfaßt, welches die Ein-Aus-Regelung und den Inverter derart justiert, daß die Gesamtkapazität den aktuellen Kühlerfordernissen entspricht.

2. Kälteanlage nach Anspruch 1, dadurch gekennzeichnet, daß drei motorbetriebene Verdichter (11,12,13) Verwendung finden, wobei zwei Verdichter (11,12) geringere Leistung und ein dritter Verdichter (13) höhere Leistung aufweist.

3. Kälteanlage nach Anspruch 1, dadurch gekennzeichnet, daß sie wenigstens zwei motorbetriebene Verdichter geringer Leistung und einen motorbetriebenen Verdichter hoher Leistung umfaßt.

4. Kälteanlage nach Anspruch 2, dadurch gekennzeichnet, daß die zwei motorbetriebenen Verdichter (11,12) geringer Leistung jeweils ungefähr 1/6 der Gesamtleistung und der dritte motorbetriebende Verdichter (13) hoher Leistung ungefähr 2/3 der Gesamtleistung aufweist.

5. Kälteanlage nach Anspruch 2, dadurch gekennzeichnet, daß jeder der zwei motorbetriebenen Kompressoren (11,12) eine Leistung von 15 % der Gesamtleistung aufweist, während der dritte motorbetriebene Kompressor (13) eine Leistung von 70 % aufweist.

## Revendications

1. Installation de réfrigération à plusieurs compresseurs comprenant un poste de réfrigération comportant une pluralité de compresseurs (11, 12, 13) de capacités différentes, entraînés par des moteurs et montés en parallèle entre un collecteur d'aspiration (14) et un collecteur de sortie (15), et un appareil de commande (16, 17, 17a) pour commander sélectivement les phases de fonctionnement des compresseurs de manière à remplir les conditions réelles de réfrigération, caractérisée en ce que l'appareil de commande (16, 17, 17a) comprend un inverseur unique (17) commandant le compresseur (13) qui a la plus forte capacité et une commande marche-arrêt (17a) pour les autres compresseurs (11, 12) qui ont une capacité ne dépassant pas la plage de commande de l'inverseur, l'appareil de commande comprenant un système logique ( 16 ) fonctionnant pour contrôler la commande marche-arrêt et l'inverseur de sorte que la capacité totale soit égale aux conditions réelles de réfrigération.

2. Installation de réfrigération suivant la revendication 1, caractérisée en ce que lesdits compresseurs (11, 12, 13) entraînés par des moteurs sont trois au nombre desquels deux (11, 12) sont de faible puissance et un troisième (13) de forte puissance.

3. Installation de réfrigération suivant la revendication 1, caractérisée en ce qu'elle comprend au moins deux compresseurs entraînés par des moteurs de faible puissance et un compresseur entraîné par un moteur de forte puissance.

4. Installation de réfrigération suivant la revendication 2, caractérisée en ce que lesdits deux compresseurs (11, 12) entraînés par des moteurs de faible puissance ont chacun un sixième environ de la puissance totale et ledit compresseur (13) entraîné par un moteur de forte puissance a deux tiers environ de la puissance totale.

5. Installation de réfrigération suivant la revendication 2, caractérisée en ce que lesdits compresseurs (11, 12) entraînés par un moteur ont chacun une puissance égale à 15 % de la puissance totale alors que ledit troisième compresseur (13) entraîné par un moteur a une puissance égale à 70 %.
